# EUROPÄISCHE PATENTSCHRIFT

(11) **EP 2 247 373 B1**
(45) Veröffentlichungstag und Bekanntmachung des Hinweises auf die Patenterteilung: **01.01.2014**
(21) Anmeldenummer: 09716818.1
(22) Anmeldetag: 20.02.2009
(51) Int. Cl.: B01F 3/04, B01F 5/04, B01F 5/20, B01F 13/10

(54) **VERFAHREN UND VERWENDUNG EINER VORRICHTUNG ZUR BELÜFTUNG VON WASSER**
PROCESS AND USE OF A DEVICE FOR AERATING WATER
PROCÉDÉ ET UTILISATION D'UN DISPOSITIF D'INTRODUCTION D'AIR DANS DE L'EAU

(30) Priorität: 05.03.2008 DE 102008012725
(43) Veröffentlichungstag der Anmeldung: 10.11.2010
(60) Teilanmeldung: 13154877.8
(73) Patentinhaber: United Waters International AG, 6304 Zug (CH)
(72) Erfinder: BRUNNER, Willi, CH-8542 Wiesendangen (CH); TANNENBERG, Dan, S-461 95 Trollhättan (SE)
(74) Vertreter: Albrecht, Ralf
(86) Internationale Anmeldenummer: PCT/EP2009/001223
(87) Internationale Veröffentlichungsnummer: WO 2009/109299

(56) Entgegenhaltungen:
- CH-A5- 642 563
- DE-A1- 1 751 255
- US-A- 743 528
- US-A- 2 591 134
- US-A- 4 375 185
- US-A- 5 372 283

## Beschreibung

Die Erfindung betrifft ein Verfahren zur Belüftung von Wasser entsprechend Anspruch 1, bei dem einem Mischrohr Luft über einen Luftzutritt und Wasser über einen Wasserzutritt unter Bildung einer Mischung aus Luft und Wasser zugeführt wird, wobei das Wasser zentral über ein Zuführrohr und dessen Mündungsöffnung in das Mischrohr eingeführt und im Bereich der Mündungsöffnung durch Aufprall auf einen Spreizkörper aufgespreizt wird. Die Erfindung betrifft des Weiteren die Verwendung einer Vorrichtung zur Durchführung des Verfahrens entsprechend Anspruch 6.

Für verschiedene Zwecke ist es erforderlich, eine Flüssigkeit mit einem Gas zu versehen oder anzureichern. Besonders häufig wird die Belüftung von Wasser, insbesondere von Gewässern, um den Sauerstoffgehalt des Wassers zu erhöhen und damit die Lebensbedingungen für Pflanzen und/oder Fische zu verbessern oder ein Umkippen des Gewässsers zu verhindern.

In der US 2,591,134 A ist ein Verfahren entsprechend dem Oberbegriff des Anspruchs 1 und die Verwendung einer gattungsgemäßen Vorrichtung zur Belüftung von Wasser entsprechend dem Oberbegriff des Anspruchs 6 offenbart, bei der in einem Mischrohr ein Zuführrohr zentral hineinragt und eine in Richtung auf die Austrittsöffnung des Mischrohrs gerichtete Mündungsöffnung aufweist, wobei das Zuführrohr mit einer unter Druck stehenden Wasserquelle verbunden ist. In der Mündungsöffnung des Zuführrohrs ist ein Spreizkörper angeordnet, der ein Aufspreizen der Flüssigkeit und damit dessen Vermischung mit der Luft zu einer Mischung aus Wasser und Luft bewirkt. Das Mischrohr besteht aus zwei in Strömungsrichtung hintereinander angeordneten Konusabschnitten, die an ihren einander zugewandten Enden eine Querschnittsverengung ausbilden. Die Mündungsöffnung des Zuführrohrs ist in Bezug auf die Querschnittsverengung so angeordnet, dass sich der beim Austreten des Wassers bildende Mischungskegel durch die Querschnittsverengung nicht beschränkt wird.

In der US 743, 528 ist eine Vorrichtung zur Belüftung von Urinalen dargestellt, bei der in einem zylindrischen Mischrohr ein Zuführrohr für die Zufuhr von Wasser zentral hineinragt. Das Zuführrohr hat eine Mündungsöffnung und ist mit einem unter Druck stehenden Wasserreservoir verbunden. In der Mündungsöffnung des Zuführrohrs ist ein Spreizkörper angeordnet, der ein Aufspreizen des Wassers und damit dessen Vermischung mit der hierdurch angesaugten Luft bewirkt.

Der US 4, 375, 185 ist eine Vorrichtung zur Hitzebehandlung von Milch zu entnehmen, bei dem die Milch über ein zentrales Zuführrohr in einen Tank eingeleitet wird, wobei die Milch mit Hilfe eines Spreizkörpers beim Austritt aus der Mündungsöffnung des Zuführrohrs aufgespreizt wird. Dabei mündet das Zuführrohr innerhalb eines größeren Rohrs. Dieses Rohr ist von einem Ringkanal umgeben, dem Dampf zugeführt werden kann, der dann über ein Lochblech austritt. Dabei kommt es erst im Tank selbst zu einer Vermischung von Milch und Dampf.

Schließlich ist aus der US 5, 372, 283 A eine Mischvorrichtung für die Zuführung einer Mischung aus zwei Polymerkomponenten bekannt, wobei ein Zuführrohr in einem Mischrohr mündet und dort die beiden Komponenten miteinander vermischt werden. Zur aeroben Behandlung von Klärschlämmen ist durch die CH 642 563 A5 ein Verfahren bekannt, bei dem Klärschlamm über einen gebogenen Rohrstutzen und über ein Kegelventil in ein Mischrohr eingeführt wird. Das Kegelventil hat einen Ventilkörper, der zwischen einer Schließstellung und einer stromabwärts liegenden Offenstellung verschieblich geführt ist. Der Ventilkörper ist von einem geraden Luftzuführrohr durchsetzt, das gleichzeitig die Funktion einer Ventilstange einnimmt und zusammen mit dem Ventilkörper axial verschieblich geführt ist. In Offenstellung des Ventilkörpers und bei Zuführung von Klärschlamm wird über das Luftzuführrohr Luft angesaugt, die zentral in das Mischrohr eintritt. Nachteilig bei diesem Verfahren ist, dass die Vermischung zwischen Klärschlamm und Luft über den Querschnitt sehr ungleichmäßig ist.

Daneben sind hydrodynamische Kavitationsmischer zur Erzeugung flüssiger Systeme, insbesondere von Emulsionen, Suspensionen oder dergleichen, bekannt, bei denen durch besondere Ausgestaltungen innerhalb eines Mischrohres Kavitationszonen erzeugt werden, in denen ein koordiniertes Zerplatzen von Kavitationsbläschen in lokalem Umfang bei gleichzeitiger Bildung von Druckwellen hoher Energie erzeugt werden. Beispiele hierfür sind der DE 44 33 744 A1 und DE 10 2005 037 026 A1 zu entnehmen. Bei beiden Kavitationsmischern wird - wie auch schon bei der Vorrichtung gemäß der CH 642 563 A5 - Luft zentral in ein Mischrohr zugeführt, und zwar einmal mit dem Flüssigkeitsstrom (DE 44 33 744 A1) und einmal gegen den Flüssigkeitsstrom (DE 10 2005 037 026 A1). Dabei ist bei dem Kavitationsmischer nach der DE 44 33 744 A1 in das zentrale Luftzuführrohr ein Kegelkörper in dessen Mündungsöffnung eingesetzt.

Der Erfindung liegt die Aufgabe zugrunde, ein Verfahren bereitzustellen, mit dem eine wesentlich höhere und über den Querschnitt gleichmäßigere Anreicherung von Wasser mit Luft erzielt wird. Eine weitere Aufgabe besteht darin, eine für die Durchführung des Verfahrens geeignete Verwendung einer Vorrichtung bereitzustellen.

Die das Verfahren betreffende Aufgabe wird erfindungsgemäß entsprechend Anspruch 1 dadurch gelöst, dass eine Beschleunigung der Mischung dadurch bewirkt wird, dass der Durchströmquerschnitt für die Mischung stromabwärts der Mündungsöffnung des Zuführrohrs verengt wird. Versuche haben gezeigt, dass hierdurch ein Wasser-Luft-Verhältnis von mehr als 1:5 erzielbar ist, ein Verhältnis, das weit größer ist, als bei bekannten Verfahren.

Die Querschnittsverengung kann als konusförmige Blende mit sich stromabwärts verengendem Querschnitt ausgebildet sein. Nach der Blende hat das Mischrohr wieder seinen ursprünglichen Querschnitt, so dass nach Beschleunigung der Strömung durch die Blende eine Art Diffuserwirkung entsteht.

Um eine gleichmäßige Spreizung des Wassers zu erzielen, sollte ein Spreizkörper verwendet werden, der um eine zur Mittelachse der Mündungsöffnung zentrische Achse achssymmetrisch ausgebildet ist. Auf diese Weise entsteht ein gespreizter, in Sonderheit ringförmiger Wasserstrahl mit großer Oberfläche für die Vermischung zwischen Wasser und Luft. Dabei ist es für das Aufspreizen zweckmäßig, wenn sich der Querschnitt des Spreizkörpers in Fließrichtung vergrößert. Für das Aufspreizen besonders geeignet ist die Form eines Kegelkörpers, wobei die Mantellinie auch sphärisch konkav und damit einer Pilzform angenähert ausgebildet sein kann. Insbesondere bei rechteckigem oder quadratischem Zuführrohr kommt jedoch auch die Verwendung eines Pontonkörper als Spreizkörper in Frage.

Nach der Erfindung ist ferner vorgesehen, dass ein Spreizkörper verwendet wird, der zumindest teilweise aus der Mündungsöffnung heraus und in das Mischrohr hineinragt, weil dann eine besonders große Spreizwirkung erzielbar ist. Dabei sollte der größte Querschnitt des Spreizkörpers größer sein als der Öffnungsquerschnitt der Mündungsöffnung.

Nach einem weiteren Merkmal der Erfindung ist vorgeschlagen, dass die Mischung an einer Austrittsöffnung des Mischrohrs auf einen Verdrängungskörper aufprallt, der der Austrittsöffnung zugeordnet ist. Hierdurch wird eine Art Brauseeffekt ausgelöst, der zu einer optimalen Flächenverteilung des ausströmenden Wasser-Luft-Gemischs und einer nochmaligen, intensiven Durchmischung führt. Vorzugsweise sollte ein Verdrängungskörper verwendet werden, der um eine zur Mittelachse der Austrittsöffnung zentrische Achse achssymmetrisch ausgebildet ist, um eine gleichmäßige Verteilung zu erzielen. Dabei sollte sich der Durchmesser des Verdrängungskörpers in Austrittsrichtung vergrößern. Der Verdrängungskörper kann beispielsweise als Prallteller und/oder als Kegelkörper mit gerader oder sphärisch gebogener Mantellinie oder als Pontonkörper ausgebildet sein. Nach der Erfindung ist ferner vorgeschlagen, dass die Mischung auf einen außerhalb des Mischrohrs angeordneten Verdrängungskörper aufprallt. Der größte Querschnitt des Verdrängungskörpers ist vorzugsweise größer als der freie Querschnitt der Austrittsöffnung.

Schließlich ist nach der Erfindung vorgesehen, dass die Mischung im Mischrohr im Bereich der Austrittsöffnung über einen Bogenabschnitt des Mischrohrs umgelenkt wird. Dies erleichtert das Herausführen der Einstellstange für den Verdrängungskörper.

Der zweite Aufgabenteil wird erfindungsgemäß durch die Verwendung einer Vorrichtung zur Belüftung von Wasser entsprechend Anspruch 6 gelöst, die ein Mischrohr, das eine Eintrittsöffnung und eine Austrittsöffnung aufweist, insbesondere im Bereich der Austrittsöffnung einen Bogenabschnitt aufweist, und ein Zuführrohr hat, das zentral in das Mischrohr hineinragt und eine in Richtung der Austrittsöffnung gerichtete Mündungsöffnung aufweist, wobei das Zuführrohr mit einer unter Druck stehenden Wasserquelle verbunden oder verbindbar ist und wobei in der Mündungsöffnung ein Spreizkörper angeordnet ist, der ein Aufspreizen des Wassers und damit dessen Vermischung mit der Luft zu einer Mischung aus Wasser und Luft bewirkt und insbesondere in Richtung der Mittelachse des Zuführrohrs axial verschieblich geführt ist, wobei das Mischrohr eine Querschnittsverengung für die Mischung stromabwärts der Mündungsöffnung aufweist, die eine Beschleunigung der Mischung bewirkt. Durch Verwendung dieser Vorrichtung werden die im Zusammenhang mit dem erfindungsgemäßen Verfahren beschriebenen Vorteile erzielt, insbesondere die intensive und gleichmäßige Durchmischung und Belüftung von Wasser mit Luft.

Die Mündungsöffnung und der Spreizkörper weisen zweckmäßigerweise komplementäre Ventilsitzflächen auf, so dass der Spreizkörper gleichzeitig auch als Ventilkörper zum Verschließen der Mündungsöffnung benutzt werden kann. Hierzu sollte der Spreizkörper in Richtung der Mittelachse des Zuführrohrs axial verschieblich geführt sein, um den Spalt zwischen Mündungsöffnung und Spreizkörper einstellen und hierdurch beispielsweise eine Anpassung an unterschiedliche Drücke der Flüssigkeit vornehmen zu können.

Nach einem weiteren Merkmal der Erfindung ist vorgesehen, dass der Spreizkörper mit einer verstelleinrichtung gekoppelt ist, über die er von außen axial verschiebbar ist. Die Verstelleinrichtung kann eine Verstellstange aufweisen, auf der der Spreizkörper sitzt und die aus dem Zuführrohr herausführt. Um eine gute Führung der Verstellstange zu gewährleisten, sollte sie einerseits in einer Wandung des Zuführrohrs und andererseits in einem Lager im Mischrohr geführt sein. Die Verstellstange kann über eine Handrad oder andere handhabbare Einrichtungen, aber auch über einen elektrischen Verstellmotor verschoben werden.

Die Mündungsöffnung des Zuführrohrs sollte so angeordnet werden, dass sie in einem geraden Abschnitt des Mischrohrs liegt. Für die Zuführung des Gases sollte dem Mischrohr ein bogenförmiger, auf das Zuführrohr gerichteter Zuführabschnitt zugeordnet sein, der in der Gaszutrittsöffnung endet.

Die Austrittsöffnung des Mischrohrs und der ihr zugeordnete Verdrängungskörper sollten komplementäre Ventilsitzflächen erhalten, so dass der Verdrängungskörper als Ventilkörper zum Verschließen des Mischrohrs verwendet werden kann. Hierzu ist es zweckmäßig, wenn der Verdrängungskörper in Richtung der Mittelachse der Austrittsöffnung axial verschieblich geführt ist.

Nach der Erfindung ist ferner vorgesehen, dass der Verdrängungskörper mit einer Einstelleinrichtung gekoppelt ist, über die er von außen axial verschiebbar ist. Die Einstelleinrichtung kann eine Einstellstange aufweisen, auf der der Verdrängungskörper sitzt und die aus dem Mischrohr heraus geführt ist. Zur Lagerung der Verstellstange sollte sie einerseits in einer Wandung des Mischrohrs und andererseits im Mischrohr im Bereich der Austrittsöffnung geführt sein. Die Verstellung der Einstellstange kann dann von Hand, beispielsweise über ein Handrad oder dergleichen, erfolgen, aber auch über einen mit der Einstellstange gekoppelten Einstellmotor.

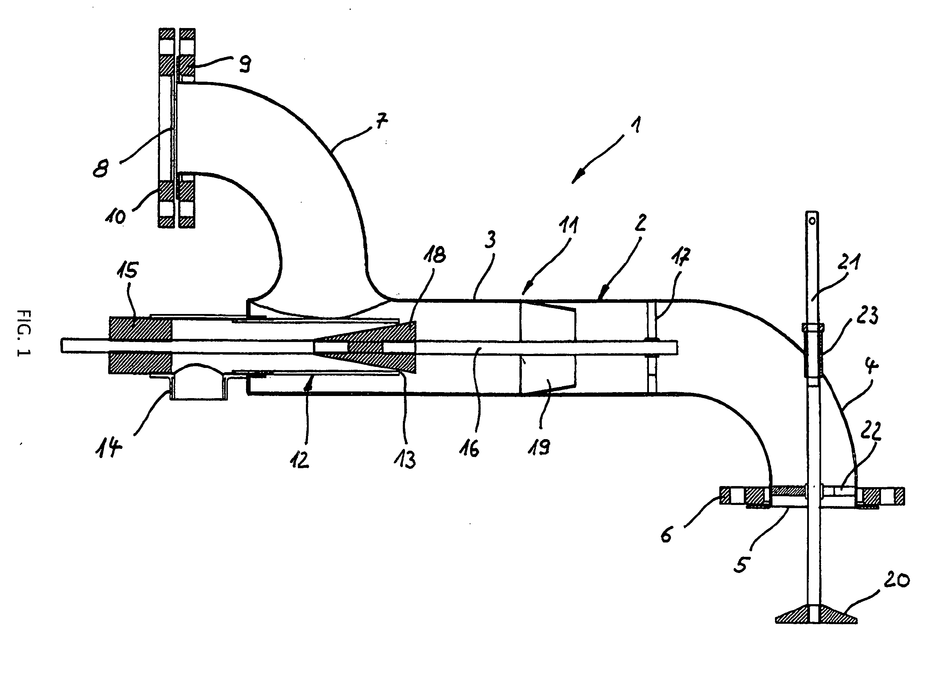

In der Zeichnung ist die erfindungsgemäße Vorrichtung anhand eines Ausführungsbeispiels näher veranschaulicht. Sie zeigt die Vorrichtung 1 zur Belüftung von Wasser in einem Längsschnitt.

Die Vorrichtung 1 hat ein Mischrohr 2 mit einem geraden Abschnitt 3 und einem sich daran in Strömungsrichtung anschließenden, gebogenen Abschnitt 4, der in einer Austrittsöffnung 5 endet. Die Austrittsöffnung 5 ist von einem Flansch 6 umgeben, über den die Austrittsöffnung 5 beispielsweise an der Öffnung eines Tanks angeschlossen werden kann.

Am stromaufwärtigen Ende des Mischrohrs 2 mündet ein bogenförmiger Luftzuführabschnitt 7, der an seinem freien Ende eine Luftzutrittsöffnung 8 aufweist, welche von einem Flasch 9 umgeben ist. Der Flansch 9 ist einem Gegenflansch 10 zugeordnet. Beide Flansche 9, 10 sind miteinander verschraubbar. Luftzuführabschnitt 7 und Mischrohr 2 mit dem geraden Abschnitt 3 und dem gebogenen Abschnitt 4 bilden das Hauptrohr 11 der Vorrichtung 1.

In das stromaufwärtige Ende des Mischrohrs 2 ragt ein gerades Zuführrohr 12 hinein, dass in dem geraden Abschnitt 3 des Mischrohrs 2 stromabwärts der Mündung des Luftzuführabschnitts 7 in das Mischrohr 2 in einer Mündungsöffnung 13 endet. Mischrohr 2 und Zuführrohr 12 haben einen gleichbleibenden, kreisförmigen Querschnitt. Das Zuführrohr 12 verläuft koaxial zur Längsachse des geraden Abschnittes 3 des Mischrohrs 2. Außerhalb des Mischrohrs 2 hat das Zuführrohr 12 eine rechtwinklich einmündenden Stutzen 14, über den das Zuführrohr 12 an eine Wasserzuführleitung angeschlossen werden kann, die mit einer Wasserpumpe für den Druckaufbau versehen sein kann. Das aus dem Mischrohr 2 herausragende Ende des Zuführrohrs 12 ist mit einer Dichtung 15 abgeschlossen.

Das Zuführrohr 12 und den geraden Abschnitt 3 des Mischrohrs 2 durchsetzt eine Verstellstange 16 in zu beiden koaxialer Anordnung. Die Verstellstange 16 ist einerends in der Dichtung 15 und anderernends in einem Lagerstern 17 axial verschieblich geführt. Der Lagerstern 17 ist mit der Innenseite des Mischrohrs 2 verbunden. Außerhalb des Zuführrohrs 12 ist eine hier nicht näher dargestellte Verstelleinrichtung vorgesehen, über die die Verstellstange 16 axial verschoben werden kann, sei es motorisch oder von Hand.

Auf der Verstellstange 16 sitzt im Bereich der Mündungsöffnung 13 ein Kegelkörper 18, dessen Durchmesser sich in Stromabwärtsrichtung vergrößert. Er ragt teilweise aus dem Zuführrohr 12 heraus. Je nach axialer Stellung der Verstellstange 16 und damit des Kegelkörpers 18 entsteht zwischen dem Innenrand der Mündungsöffnung 13 und dem Mantel des Kegelkörpers 18 ein mehr oder weniger großer Ringspalt. Er ist um so größer, je mehr der Kegelkörper 18 in Stromabwärtsrichtung verstellt ist.

Zwischen Mündungsöffnung 13 des Zuführrohrs 12 und dem Lagerstern 17 ist eine Konusblende 19 angeordnet, die am stromaufwärtigen Ende mit der Innenseite des Mischrohrs 2 verbunden ist und in Stromabwärtsrichtung den Querschnitt des Mischrohrs 2 konusförmig verkleinert. Hinter der Konusblende 19 entspricht der Querschnitt wiederum dem des Mischrohrs 2.

Der Austrittsöffnung 5 des Mischrohrs 2 zugeordnet ist eine Prallteller 20, der konusförmig mit sich in Fließrichtung vergrößernden Durchmesser ausgebildet ist. Er ist am aus der Austrittsöffnung 5 herausragenden Ende einer Einstellstange 21 befestigt, die die Austrittsöffnung 5 durchsetzt und dort in einem Lagerstern 22 axial verschieblich und koaxial zur Austrittsachse der Austrittsöffnung 5 geführt ist. Nach oben hin durchsetzt die Einstellstange 21 den gebogenen Abschnitt 4 des Mischrohrs 2 in einer Dichtungsbuchse 23. Am dort herausragenden Ende ist - wie bei der Verstellstange 16 - eine Einstelleinrichtung vorgesehen, über die der Abstand zwischen Austrittsöffnung 5 und Prallteller 20 durch axiale Verschiebung der Einstellstange 21 justiert werden kann.

Die gezeigte Vorrichtung 1 arbeitet im Betrieb wie folgt. Über den Stutzen 14 wird unter ggf. mit einer Pumpe erzeugten Druck stehendes Wasser dem Zuführrohr 12 zugeführt. Im Bereich des Kegelkörpers 18 wird das Wasser nach außen gedrängt und tritt in Form eines gefächerten Ringstrahls über den zwischen Mündungsöffnung 13 und Kegelkörper 18 gebildeten Ringspalt in das Mischrohr 2 ein. Hierdurch wird über die Luftzutrittsöffnung 8 und den Luftzuführabschnitt 7 Luft angesaugt, die sich intensiv mit dem aus dem Zuführrohr 12 austretenden, gefächerten Wasserstrahl vermischt. Dies wird unterstützt durch die Konusblende 19, die eine Beschleunigung des Wasser-Luft-Gemischs bewirkt. Das Gemisch tritt dann in den gebogenen Abschnitt 4 des Mischrohrs 2 ein und strömt über die Austrittsöffnung 5 beispielsweise in einen Tank. Dabei prallt das Gemisch auf den Prallteller 20 und wird hierdurch breit gefächert, wodurch eine nochmalige Belüftung des Wasser bewirkt wird.

## Patentansprüche

1. Verfahren zur Belüftung von Wasser, bei dem einem Mischrohr (2) Luft über einen Luftzutritt (7) und Wasser über einen Wasserszutritt (13) unter Bildung einer Mischung aus Luft und Wasser zugeführt wird, wobei das Wasser zentral über ein Zuführrohr (12) und dessen Mündungsöffnung (13) in das Mischrohr (2) eingeführt und im Bereich der Mündungsöffnung (13) durch Aufprall auf einen Spreizkörper (18) aufgespreizt wird, **dadurch gekennzeichnet, dass** eine Beschleunigung der Mischung dadurch bewirkt wird, dass der Durchströmquerschnitt für die Mischung stromabwärts der Mündungsöffnung (13) vorzugsweise konusförmig verengt wird.

2. Verfahren nach Anspruch 1, **dadurch gekennzeichnet, dass** das Wasser mittels eines Spreizkörpers (18) aufgespreizt wird, der um eine zur Mittelachse der Mündungsöffnung (13) konzentrische Achse achssymmetrisch ausgebildet ist, insbesondere wobei sich der Querschnitt des Spreizkörpers (18) in Fließrichtung des Wassers vergrößert, und/oder dass das Wasser durch einen als Kegelkörper ausgebildeten Spreizkörper (18) aufgespreizt ist.

3. Verfahren nach einem der Ansprüche 1 oder 2, **dadurch gekennzeichnet, dass** das Wasser durch einen Spreizkörper (18) aufgespreizt wird, der zumindest teilweise aus der Mündungsöffnung (13) heraus- und in das Mischrohr hineinragt, insbesondere wobei dessen größte Quererstreckung größer ist als der freie Querschnitt der Mündungsöffnung (13).

4. Verfahren nach einem der Ansprüche 1 bis 3, **dadurch gekennzeichnet, dass** die Mischung an einer Austrittsöffnung (5) des Mischrohrs (2) auf einen Verdrängungskörper (20) aufprallt und/oder dass die Mischung auf einen Verdrängungskörper (20) aufprallt, der um eine zur Mittelachse der Austrittsöffnung konzentrische Achse symmetrisch ausgebildet ist.

5. Verfahren nach Anspruch 4, **dadurch gekennzeichnet, dass** die Mischung auf einen Verdrängungskörper (20) aufprallt, dessen Quererstreckung sich in Austrittsrichtung vergrößert und/oder der als Prallteller oder Kegelkörper ausgebildet ist und/oder außerhalb des Mischrohrs sitzt und/oder dessen größte Quererstreckung größer ist als der freie Querschnitt der Austrittsöffnung (5) und/oder die Mischung im Mischrohr (2) im Bereich der Austrittsöffnung (5) über einen Bogenabschnitt (4) des Mischrohrs (2) umgelenkt wird.

6. Verwendung einer Vorrichtung (1) mit einem Mischrohr (2), das eine Eintrittsöffnung (7, 8) und eine Austrittsöffnung (5) aufweist, insbesondere im Bereich der Austrittsöffnung (5) einen Bogenabschnitt (4) aufweist, und mit einem Zuführrohr (12), das zentral in das Mischrohr (2) hineinragt und eine in Richtung der Austrittsöffnung (5) gerichtete Mündungsöffnung (13) aufweist, zur Belüftung von Wasser, wobei das Zuführrohr (12) mit einer unter Druck stehenden Wasserquelle verbunden oder verbindbar ist und wobei in der Mündungsöffnung (13) ein Spreizkörper (18) angeordnet ist, der ein Aufspreizen des Wassers und damit dessen Vermischung mit der Luft zu einer Mischung aus Wasser und Luft bewirkt und insbesondere in Richtung der Mittelachse des Zuführrohrs (12) axial verschieblich geführt ist, dardurch gekennzeichnet, dass das Mischrohr (2) eine Querschnittsverengung (19) für die Mischung stromabwärts der Mündungsöffnung (13) aufweist, die eine Beschleunigung der Mischung bewirkt.

7. Verwendung nach Anspruch 6, **dadurch gekennzeichnet, dass** die Querschnittsverengung als konusförmige Blende (19) mit sich stromabwärts verengendem Querschnitt ausgebildet ist.

8. Verwendung nach Anspruch 6 oder 7, **dadurch gekennzeichnet, dass** der Spreizkörper (18) um eine zur Mittelachse der Mündungsöffnung (13) konzentrische Achse achssymmetrisch ausgebildet ist, insbesondere wobei sich der Querschnitt des Spreizkörpers (18) in Richtung auf die Austrittsöffnung (5) des Mischrohrs (2) vergrößert und/oder dass der Spreizkörper als Kegelkörper (18) ausgebildet ist.

9. Verwendung nach einem der Ansprüche 6 bis 8, **dadurch gekennzeichnet, dass** der Spreizkörper (18) zumindest teilweise aus der Mündungsöffnung (13) heraus- und in das Mischrohr (2) hineinragt, insbesondere wobei die größte Quererstreckung des Spreizkörpers (18) größer ist als der freie Querschnitt der Mündungsöffnung (13) und vorzugsweise die Mündungsöffnung (13) und der Spreizkörper (18) komplementäre Ventilsitzflächen aufweisen.

10. Verwendung nach einem der Ansprüche 6 bis 9, **dadurch gekennzeichnet, dass** der Spreizkörper (18) mit einer Verstelleinrichtung gekoppelt ist, über die er von außen axial verschiebbar ist, wobei die Verstelleinrichtung eine Verstellstange (16) aufweist, auf der der Spreizkörper (18) sitzt und die aus dem Zuführrohr (12) herausgeführt ist, insbesondere wobei die Verstellstange (16) einerseits in einer Wandung des Zuführrohrs (12) und andererseits in einem Lager (17) im Mischrohr (2) geführt ist und über einen Verstellmotor axial verschiebbar ist.

11. Verwendung nach einem der Ansprüche 6 bis 10, **dadurch gekennzeichnet, dass** die Mündungsöffnung (13) in einem geraden Abschnitt (3) des Mischrohrs (2) liegt und/oder dem Mischrohr (2) ein bogenförmiger, auf das Zuführrohr (12) gerichteter Luftzuführabschnitt (7) zugeordnet ist.

12. Verwendung nach einem der Ansprüche 6 bis 11, **dadurch gekennzeichnet, dass** der Austrittsöffnung (5) des Mischrohrs (2) ein Verdrängungskörper (20) zugeordnet ist, insbesondere wobei um eine zur Mittelachse der Austrittsöffnung (5) konzentrische Achse symmetrisch ausgebildet ist, vorzugsweise wobei sich die Quererstreckung des Verdrängungskörpers (20) in Austrittsrichtung vergrößert, vorzugsweise wobei der Verdrängungskörper als Prallteller (20) ausgebildet ist und/oder der Verdrängungskörper als Kegelkörper (20) ausgebildet ist und/oder der Verdrängungskörper (20) außerhalb des Mischrohrs (2) sitzt.

13. Verwendung nach Anspruch 12, **dadurch gekennzeichnet, dass** die größte Quererstreckung des Verdrängungskörpers (20) größer ist als der freie Querschnitt der Austrittsöffnung (5), insbesondere wobei die Austrittsöffnung (5) und der Verdrängungskörper (20) komplementäre Ventilsitzflächen aufweisen.

14. Verwendung nach einem der Ansprüche 12 oder 13, **dadurch gekennzeichnet, dass** der Verdrängungskörper (20) in Richtung der Mittelachse der Austrittsöffnung (5) axial verschieblich geführt ist und vorzugsweise mit einer Einstelleinrichtung gekoppelt ist, über die er von außen axial verschiebbar ist, insbesondere wobei die Einstelleinrichtung eine Einstellstange (21) aufweist, auf der der Verdrängungskörper (20) sitzt und die aus dem Mischrohr (2) herausgeführt ist und wobei dann die Einstellstange (21) einerseits in einer Wandung des Mischrohrs (2) und andererseits im Mischrohr (2) im Bereich der Austrittsöffnung (5) geführt sein kann.

## Claims

1. A method for aerating water, wherein air is fed to a mixing tube (2) via an air inlet and water via a water inlet such as to form a mixture of water and air, wherein the water is introduced centrally via a feed pipe (12) and a mouth opening (13) of the latter into the mixing tube (2), and is spread in the region of the mouth opening (13) by means of an impact onto a spreader (18), **characterised in that** an acceleration of the mixture is caused by narrowing preferably conically the flow-through cross-section for the mixture downstream of the mouth opening (13) of the mixing tube (2).

2. The method according to Claim 1, **characterised in that** the water is spread by means of a spreader (18) which is formed in an axially symmetrical manner about an axis concentric to the central axis of the mouth opening (13), particularly wherein the cross-section of the spreader (18) increases in the direction of flow of the water and/or that the water is spread by means of a spreader (18) in the form of a conical body.

3. The method according to Claim 2, **characterised in that** the water is spread by means of a spreader (18) which projects at least partially out of the mouth opening (13) and into the mixing tube, particularly wherein the largest transverse width of which is greater than the free cross-section of the mouth opening (13).

4. The method according to any of Claims 1 to 3, **characterised in that** the mixture impacts upon a displacer (20) at an outlet opening (5) of the mixing tube (2) and/or that the mixture impacts upon a displacer (20) which is formed symmetrically about an axis concentric to the central axis of the outlet opening.

5. The method according to Claim 4, **characterised in that** the mixture impacts upon a displacer (20) the transverse width of which increases in the outlet direction and/or which is in the form of a baffle plate or of a conical body and/or is sitting outside of the mixing tube and/or the greatest transverse width of which is greater than the free cross-section of the outlet opening (5) and/or the mixture in the mixing tube (2) is deflected in the region of the outlet opening (5) over a bend section (4) of the mixing tube (2).

6. Use of an apparatus (1), comprising a mixing tube (2) which has an inlet opening and an outlet opening (5), particularly having a bend section in the region of the outlet opening (5), and comprising a feed pipe (12) which projects centrally into the mixing tube (2) and has a mouth opening (13) directed towards the outlet opening (5), for aerating water, wherein the feed pipe (12) is connected or connectable to a pressurised water source, there being disposed in the mouth opening (13) a spreader (18) which causes spreading of the water and therewith mixture of the water with the air forming a mixture out of water and air and which particularly is guided with axial displacement towards the central axis of the feed pipe (12), **characterised in that** the mixing tube (2) comprises a cross-section narrowing (19) downstream of the mouth opening (13) causing an acceleration of the mixture.

7. The use according to Claim 6, **characterised in that** the cross-sectional narrowing is in the form of a conical aperture (19) having a cross-section narrowing in downstream direction.

8. The use according to Claim 6 or 7, **characterized in that** the spreader (18) is formed in an axially symmetrical manner about an axis concentric to the central axis of the mouth opening (13), particularly wherein the cross-section of the spreader (18) increases towards the outlet opening (5) of the mixing tube (2) and/or that the spreader is in the form of a conical body (18).

9. The use according to any of Claims 6 to 7, **characterised in that** the spreader (18) projects at least partially out of the mouth opening (13) and into the mixing tube (2), particularly wherein the greatest transverse width of the spreader (18) is greater than the free cross-section of the mouth opening (13) and preferably the mouth opening (13) and the spreader (18) have complementary valve bearing surfaces.

10. The use according to any of Claims 6 to 9, **characterised in that** the spreader (18) is coupled to an adjusting device by means of which it can be axially displaced from the outside, wherein the adjusting device has an adjusting rod (16) on which the spreader (18) sits, and which is guided out of the feed pipe (12), particularly wherein the adjusting rod (16) is guided on the one hand in a wall of the feed pipe (12) and on the other hand in a mounting (17) in the mixing tube and can be displaced axially by means of a servomotor.

11. The use according to any of Claims 6 to 10, **characterised in that** the mouth opening (13) lies in a straight section (3) of the mixing tube (2) and/or that an arched air feed section (7) directed towards the feed pipe (12) is assigned to the mixing tube (2).

12. The use according to any of Claims 6 to 11, **characterised in that** a displacer (20) is assigned to the outlet opening (5) of the mixing tube (2), particularly wherein the displacer (20) is formed symmetrically about an axis concentric to the central axis of the outlet opening (5), preferably wherein the transverse width of the displacer (20) increases in the outlet direction, preferably wherein the displacer is in the form of a baffle plate and/or the displacer is in the form of a conical body and/or the displacer (20) sits outside of the mixing tube (2).

13. The use according to Claim 12, **characterized in that** the greatest transverse width of the displacer (20) is greater than the free cross-section of the outlet opening (5), particularly wherein the outlet opening (5) and the displacer (20) have complementary valve bearing surfaces.

14. The use according to any of Claims 12 or 13, **characterised in that** the displacer (20) is guided with axial displacement towards the central axis of the outlet opening (5) and preferably is coupled to a positioning device by means of which it can be axially displaced from the outside, particularly wherein the positioning device has a positioning rod (21) on which the displacer (20) sits and which is guided out of the mixing tube (2) and wherein then the adjusting rod (21) can be guided on the one hand in a wall of the mixing rod (2) and on the other hand in the mixing tube (2) in the region of the outlet opening (5).

## Revendications

1. Procédé d'aération de l'eau au cours duquel de l'air, par la voie d'une arrivée d'air (7), et de l'eau, par la voie d'une arrivée d'eau (13), sont acheminés à un tube mélangeur (2) pour y former un mélange d'eau et d'air, l'eau étant introduite dans le tube mélangeur (2) de façon centrale par un tube d'alimentation (12) et son embouchure (13), puis éjectée au niveau de l'embouchure (13) par un choc sur un un corps d'expansion (18), **caractérisé en ce qu'**une accélération du mélange est ainsi engendrée, que la section d'écoulement transversale est resserrée en aval de l'embouchure (13), préférablement en forme de cône.

2. Procédé d'après la revendication 1, **caractérisé en ce que** l'eau est éjectée au moyen d'un corps d'expansion (18) formé de façon axisymétrique sur un axe concentrique à l'axe moyen de l'embouchure (13), la section transversale du corps d'expansion (18) s'agrandissant notamment dans la direction de l'écoulement de l'eau et/ou que l'eau est éjectée par un corps d'expansion (18) formé comme un corps conique.

3. Procédé d'après les revendications 1 ou 2, **caractérisé en ce que** l'eau est éjectée par un corps d'expansion (18) qui, au moins partiellement, émerge de l'embouchure (13) puis entre dans le tube mélangeur, dont notamment la plus grande étendue transversale est plus grande que la section transversale libre de l'embouchure (13).

4. Procédé d'après l'une des revendications 1 à 3, **caractérisé en ce que** le mélange percute à l'orifice de sortie (5) du tube mélangeur (2) un corps de refoulement (20) et/ou que le mélange percute un corps de refoulement (20) formé de façon symétrique sur un axe concentrique à l'axe moyen de l'embouchure.

5. Procédé d'après la revendication 4, **caractérisée en ce que** le mélange percute un corps de refoulement (20) dont l'étendue transversale s'étend en grossissant vers la sortie et/ou formé comme une plaque de rebondissement ou corps conique et/ou se situe à l'extérieur du tube mélangeur et/ou dont la plus grande étendue transversale est plus grosse que la section transversale libre de la l'orifice de sortie (5) et/ou le mélange est redirigé dans le tube mélangeur (2) au niveau de la l'orifice de sortie (5) par un segment arqué (4) du tube mélangeur (2).

6. Utilisation d'un dispositif (1) avec un tube mélangeur (2) qui dispose d'un orifice d'entrée (7, 8), d'un orifice de sortie (5) et surtout d'un segment arqué (4) au niveau de l'orifice de sortie (5), et avec un tube d'alimentation (12) qui s'insère au niveau du centre dans le tube mélangeur (2) et dispose d'une embouchure (13) dirigée vers l'orifice de sortie (5), afin d'aérer de l'eau, le tube d'alimentation (12) étant relié ou pouvant l'être avec une source d'eau sous pression et l'embouchure (13) disposant d' un corps d' expansion (18) qui éjecte l'eau, la faisant se mélanger avec l'air et engendrant ainsi un mélange d'eau et d'air, et qui est notamment monté de façon à pouvoir se déplacer axialement en direction de l'axe moyen du tube d'alimentation (12), **caractérisée en ce que** le tube mélangeur (2) présente un rétrécissement de la section transversale (19) pour le mélange en aval de l'embouchure (13), ce qui engendre une accélération du mélange.

7. Utilisation d'après la revendication 6, **caractérisée en ce que** le rétrécissement de la section transversale et formé comme un volet de forme conique (19) avec une section transversale qui s' étend en se rétrécissant en aval du courant.

8. Utilisation d'après les revendications 6 ou 7, **caractérisée en ce que** le corps d'expansion (18) est formé de façon axisymétrique sur un axe concentrique à l'axe moyen de l'embouchure (13), la section transversale du corps d'expansion (18) s'agrandissant notamment dans la direction de l'orifice de sortie (5) du tube mélangeur (2) et/ou que le corps d'expansion soit formé comme un corps conique (18).

9. Utilisation d'après les revendications 6 à 8, **caractérisée en ce que** le corps d'expansion (18) émerge de l'embouchure (13) puis entre dans le tube mélangeur (2) au moins partiellement, la plus grande étendue transversale du corps d'expansion (18) étant notamment plus grosse que la section transversale libre de l'embouchure (13) et l'embouchure (13) ainsi que le corps d'expansion (18) étant préférablement dotés de sièges à soupapes.

10. Utilisation d'après l'une des revendications 6 à 9, **caractérisée en ce que** le corps d'expansion (18) est couplé avec un dispositif de réglage par lequel il peut être déplacé axialement à partir de l'extérieur, le dispositif de réglage étant équipé d'une barre de réglage (16) sur laquelle est situé le corps d' expansion (18) et qui ressort du tube d' alimentation (12), la barre de réglage (16) étant notamment insérée d'un côté dans une paroi du tube d'alimentation (12) et d'un autre côté dans un palier (17) du tube mélangeur (2), puis déplaçable axialement au moyen d'un moteur de réglage.

11. Utilisation d'après l'une des revendications 6 à 10, **caractérisée en ce que** l'embouchure (13) se trouve dans une section droite (3) du tube mélangeur (2) et/ou que soit assignée au tube mélangeur (2) une section d'approvisionnement en air (7) de forme arquée orientée vers le tube d'alimentation (12).

12. Utilisation d'après l'une des revendications 6 à 11, **caractérisée en ce qu'**un corps d'expansion (20) est assigné à l'orifice de sortie (5) du tube mélangeur (2) et notamment formé de façon symétrique sur un axe concentrique à l'axe moyen de l'orifice de sortie (5), l'étendue transversale du corps d'expansion (20) s'agrandissant préférablement en direction de la sortie et, préférablement, le corps d'expansion étant formé comme une plaque de rebondissement (20) et/ou le corps d'expansion étant formé comme un corps conique (20) et/ou le corps d'expansion (20) étant situé à l'extérieur du tube mélangeur (2).

13. Utilisation d'après la revendication 12, **caractérisée en ce que** la plus grosse étendue transversale du corps d'expansion (20) est plus grosse que la section transversale libre de l'orifice de sortie (5), l'orifice de sortie (5) et le corps d'expansion (20) étant notamment dotés de sièges à soupapes complémentaires.

14. Utilisation d'après l'une des revendications 12 ou 13, **caractérisée en ce que** le corps d'expansion (20) peut être coulissé axialement en direction de l'axe moyen de l'orifice de sortie (5) et préférablement couplé à un dispositif de réglage au moyen duquel il peut être déplacé axialement, le dispositif de réglage disposant notamment d'une barre de réglage (21) sur laquelle se trouve le corps d'expansion (20) et qui ressort du tube mélangeur (2), la barre de réglage (21) pouvant être insérée d'un côté dans une paroi du tube mélangeur (2) et d'un autre côté dans le tube mélangeur (2) au niveau de l'orifice de sortie (5).
